# DEMANDE DE BREVET EUROPEEN

(11) **EP 4 601 126 A1**
(43) Date de publication de la demande: **13.08.2025**
(21) Numéro de dépôt: 24307306.1
(22) Date de dépôt: 26.12.2024
(51) Int. Cl.: H01R 4/68, H02G 15/34

(54) **ENSEMBLE DE CONNEXION DE DEUX CÂBLES SUPRACONDUCTEURS**

(30) Priorité: 06.02.2024 FR 2401126
(71) Demandeur: Nexans, 92400 Courbevoie (FR)
(72) Inventeur: LALLOUET, Nicolas, 92400 Courbevoie (FR); LEGRAND, Loïc, 92400 Courbevoie (FR); DELPLACE, Sébastien, 92400 Courbevoie (FR)
(74) Mandataire: Cabinet Boettcher

(57) **Abrégé**

L'invention concerne une installation de câbles supraconducteurs comprenant : au moins une fosse de jonction (F) dans laquelle arrivent des câbles supraconducteurs (C1, C2), chaque câble supraconducteur (C1, C2) comprenant un coeur de câble entouré d'une enveloppe cryogénique (Cr1, Cr2) et au moins un ensemble de connexion (100) situé dans ladite fosse de jonction (F) de manière à connecter deux desdits câbles supraconducteurs pour réaliser une liaison de transmission. Ledit ensemble comprend un dispositif de jonction (50) comprenant deux ports de connexion (P1, P2), chaque port de connexion étant configuré pour recevoir le coeur de câble d'un respectif des deux câbles supraconducteurs (C1, C2) ; et deux dispositifs de compensation (22a, 22b) configurés pour absorber une variation de longueur du coeur de câble d'un respectif desdits câbles supraconducteurs, causée par une variation de température pour un passage à l'état supraconducteur. Chaque dispositif de compensation comprend une extrémité d'entrée (Ee) configurée pour recevoir le coeur de câble et une extrémité de sortie (Es) connectée à l'un respectif desdits ports de connexion de manière à délivrer le coeur de câble vers le dispositif de jonction.

## Description

### Domaine technique et arrière-plan technologique

La présente invention concerne un ensemble de connexion configuré pour connecter deux câbles supraconducteurs. L'invention concerne en outre une installation de câbles supraconducteurs comprenant un ensemble selon l'invention.

L'invention s'applique typiquement, mais non exclusivement, aux câbles supraconducteurs destinés au transport d'énergie électrique, notamment aux liaisons électriques à basse tension, ou à moyenne tension (notamment de 6 à 45-60 kV) ou à haute tension (notamment supérieure à 60 kV, et pouvant aller jusqu'à 400 kV par exemple), qu'elles soient en courant continu ou alternatif, dans différents domaines tels que ceux du transport d'électricité aérien, sous-marin, terrestre, ou encore de l'aéronautique, ou du transport ferroviaire.

En particulier, les câbles supraconducteurs permettent de transporter des courants électriques, notamment de forte intensité, avec des sections de câble beaucoup plus faibles que celle des câbles de transport conventionnels composés de conducteurs électriques résistifs, tout en limitant les pertes électriques le long du câble, notamment les pertes par effet Joule, puisque ce phénomène est inexistant dans l'état supraconducteur.

Un câble supraconducteur dit « à diélectrique froid » comprend généralement un coeur de câble comportant au moins une partie supraconductrice centrale, une couche diélectrique entourant la partie supraconductrice, un écran entourant ladite couche diélectrique et pouvant être constitué pour tout ou partie de supraconducteurs. Le câble supraconducteur comprend en outre une enceinte cryogénique ou cryostat entourant ledit coeur de câble. Le cryostat comprend typiquement deux enveloppes concentriques, isolées thermiquement entre elles par un niveau de vide, de 10⁻⁵ mbar par exemple. Un fluide cryogénique contenu à l'intérieur de l'enveloppe interne du cryostat refroidit le coeur de câble, notamment à travers la couche diélectrique, d'où la désignation de "diélectrique froid", jusqu'à atteindre une température pour laquelle le supraconducteur est dans un état de supraconductivité. Cette température est par exemple de l'ordre de - 200°C pour des supraconducteurs dits « haute température ». On connait également des câbles supraconducteurs, dits à « diélectrique chaud » où la partie supraconductrice est incluse dans un élément creux, en général un tube, dans lequel circule un fluide cryogénique. La couche diélectrique est appliquée dans ce cas sur ce tube, qui peut être isolé thermiquement, d'où la désignation de « diélectrique chaud ».

En outre, pour obtenir une liaison de transmission de grande longueur (faisant plusieurs kilomètres ou dizaines de kilomètres), il est nécessaire de connecter successivement des câbles supraconducteurs. En effet, les câbles supraconducteurs sont fabriqués en longueurs unitaires finis, définies par leur capacité de transport sur touret. Cette longueur unitaire dépend spécifiquement du design de câble choisi mais se situe habituellement entre quelques centaines de mètres et 1 à 2 kilomètres. Chaque câble supraconducteur est généralement installé dans un conduit qui débouche dans une fosse de jonction dans laquelle le câble supraconducteur est connecté avec le câble supraconducteur suivant.

Lors du refroidissement pour atteindre l'état de supraconductivité, le coeur de câble se rétracte significativement. On estime ainsi que sa longueur varie d'environ 0,3%. Par exemple, une distance de câble de 800 m amène une rétractation du coeur de câble pouvant aller jusqu'à 2,4 m.

Une solution pour gérer la réduction de la longueur du coeur de câble lors du refroidissement des câbles supraconducteurs est connue de la publication de demande de brevet US 2019/0260194 A1. Le document décrit un dispositif de compensation comprenant une enveloppe cryogénique de forme courbée avec un grand rayon de courbure. A température ambiante, le coeur de câble se trouve au niveau de la portion de la paroi interne de l'enveloppe cryogénique ayant le rayon de courbure le plus grand. Lors du refroidissement, le coeur de câble se rétracte en se déplaçant vers la portion de la paroi interne de l'enveloppe cryogénique ayant le rayon de courbure le plus faible. L'avantage de ce dispositif de compensation est qu'aucune force extérieure n'est appliquée sur le coeur de câble. Il se déplace de lui-même dans un espace contrôlé.

Cependant, l'intégration du dispositif de compensation requiert un espace supplémentaire dans les systèmes de câbles supraconducteurs. Plus le câble supraconducteur est long, plus le rayon de courbure requis du dispositif de compensation est grand. Dans une liaison de transmission comprenant plusieurs câbles supraconducteurs connectés entre eux, l'encombrement lié à l'intégration du ou des dispositifs de compensation est encore plus délicate à gérer.

Il existe donc un besoin pour gérer, avec un encombrement limité, les rétractations dues au refroidissement nécessaire pour obtenir l'état supraconducteur, dans une liaison de transmission comprenant une pluralité de câbles supraconducteurs connectés en série.

### Résumé de l'invention

Pour cela, l'invention propose une installation de câbles supraconducteurs comprenant : au moins une fosse de jonction dans laquelle arrivent des câbles supraconducteurs, chaque câble supraconducteur comprenant un coeur de câble entouré d'une enveloppe cryogénique et au moins un ensemble de connexion situé dans ladite fosse de jonction de manière à connecter deux desdits câbles supraconducteurs pour réaliser une liaison de transmission, ledit ensemble de connexion comprenant :
un dispositif de jonction comprenant deux ports de connexion, chaque port de connexion étant configuré pour recevoir le coeur de câble d'un respectif des deux câbles supraconducteurs, et
deux dispositifs de compensation configurés pour absorber une variation de longueur du coeur de câble d'un respectif desdits câbles supraconducteurs, causée par une variation de température pour un passage à l'état supraconducteur,
chaque dispositif de compensation comprenant une extrémité d'entrée configurée pour recevoir le coeur de câble et une extrémité de sortie connectée à l'un respectif desdits ports de connexion de manière à délivrer le coeur de câble vers le dispositif de jonction.

L'invention concerne en outre un ensemble de connexion configuré pour connecter deux câbles supraconducteurs de manière à réaliser une liaison de transmission, chaque câble supraconducteur comprenant un coeur de câble entouré d'une enveloppe cryogénique, ledit ensemble comprenant :
- un dispositif de jonction comprenant deux ports de connexion, chaque port de connexion étant configuré pour recevoir le coeur de câble d'un respectif des deux câbles supraconducteurs, et
- deux dispositifs de compensation configurés pour absorber une variation de longueur du coeur de câble d'un respectif desdits câbles supraconducteurs, causée par une variation de température pour un passage à l'état supraconducteur,
chaque dispositif de compensation comprenant une extrémité d'entrée configurée pour recevoir le coeur de câble et une extrémité de sortie connectée à l'un respectif desdits ports de connexion de manière à délivrer le coeur de câble vers le dispositif de jonction.

En prévoyant un dispositif de compensation de part et d'autre du dispositif de jonction, la rétractation due au refroidissement pour obtenir l'état supraconducteur est gérée au niveau de chaque câble. En associant les dispositifs de compensation et le dispositif de jonction, ceux-ci peuvent être prévus dans un même espace, ce qui facilite leur intégration dans le système de câbles supraconducteurs.

Selon un mode de réalisation, les ports de connexion du dispositif de jonction sont situés à des extrémités opposées du dispositif de jonction.

Selon un mode de réalisation, les ports de connexion du dispositif de jonction sont situés à une même extrémité du dispositif de jonction.

Selon un mode de réalisation, chaque dispositif de compensation comporte un tube intérieur et un tube extérieur coaxiaux entre lesquels une isolation par le vide est prévue, le tube intérieur étant configuré pour recevoir le coeur du câble supraconducteur respectif et un fluide de refroidissement destiné à refroidir ledit coeur à une température de refroidissement pour un état supraconducteur ; lesdits tubes intérieur et extérieur présentant au moins une courbure d'un angle supérieur ou égal à 90°, et les dimensions des tubes intérieur et extérieur étant configurées de sorte que, dans ladite courbure :
- à température ambiante, le coeur de câble est à proximité d'une portion de la paroi interne du tube intérieur ayant le rayon de courbure le plus grand, et
- à température de refroidissement, le coeur de câble est à proximité d'une portion de la paroi interne du tube intérieur ayant un rayon de courbure le plus petit.

Selon une variante, les courbures des dispositifs de compensation sont logées dans un espace délimité par un côté du dispositif de jonction et/ou agencées de sorte que leurs axes sont parallèles entre eux.

Selon une variante, les courbures sont situées sensiblement en vis-à vis le long d'une direction longitudinale du dispositif de jonction.

Selon une variante, les axes des courbures sont perpendiculaires ou parallèles à un plan transversal central commun des ports de connexion du dispositif de jonction.

Selon une variante, les courbures des dispositifs de compensation sont de part et d'autre d'un plan médian du dispositif de jonction ; et les axes des courbures sont parallèles à un plan transversal commun des ports de connexion du dispositif de jonction.

Selon une variante, un desdits dispositifs de compensation a une courbure de 360°, lequel dispositif de compensation ayant une extrémité de sortie orientée vers le même côté que le port de connexion correspondant du dispositif de jonction, ladite extrémité de sortie dudit dispositif de compensation étant connectée au port respectif via un élément de rattrapage comprenant une forme en U.

Selon une variante, les courbures des dispositifs de compensation ont des angles de 180° et présentent entre elles un décalage angulaire de manière à laisser passer les câbles connectés aux dispositifs de compensation.

L'invention concerne en outre une Installation de câbles supraconducteurs comprenant au moins une fosse de jonction dans laquelle arrivent des câbles supraconducteurs, et au moins un ensemble de connexion selon l'invention situé dans ladite fosse de jonction de manière à connecter deux desdits câbles supraconducteurs.

Selon un mode de réalisation, l'installation de câbles supraconducteurs comprend une pluralité d'ensembles de connexion situés dans ladite fosse de jonction de manière à connecter une paire respective desdits câbles supraconducteurs.

Selon une variante, les dispositifs de jonction sont alignés suivant une même direction longitudinale et les courbures sont en vis-à-vis suivant ladite direction longitudinale, ou suivant une direction perpendiculaire à ladite direction longitudinale.

Selon un mode de réalisation, l'installation comprend au moins deux fosses de jonction dans lesquelles les câbles supraconducteurs arrivent, chaque fosse de jonction comprenant au moins un ensemble de connexion de manière à connecter une paire respective desdits câbles supraconducteurs, un des câbles de la paire traversant l'autre fosse de jonction.

Selon un mode de réalisation, les câbles supraconducteurs connectés à l'au moins un ensemble de connexion comprennent une première extrémité connectée audit ensemble de connexion et une deuxième extrémité connectée à un dispositif de compensation.

L'invention concerne également une installation de câbles supraconducteurs comprenant une pluralité d'ensembles de connexion selon l'invention, connectant en série une pluralité de câbles d'une liaison de transmission.

L'invention concerne aussi une installation de câbles supraconducteurs comprenant au moins une fosse de jonction dans laquelle arrivent des câbles supraconducteurs, chaque câble supraconducteur comprenant un coeur de câble entouré d'une enveloppe cryogénique, et une pluralité d'ensembles de connexion situés dans ladite fosse de jonction de manière à connecter une paire respective desdits câbles supraconducteurs, chaque ensemble de connexion comprenant :
- un dispositif de jonction comprenant deux ports de connexion, chaque port de connexion étant configuré pour recevoir le coeur d'un câble respectif de la paire de câbles supraconducteurs, et
- au moins un dispositif de compensation configuré pour absorber une variation de longueur du coeur d'un premier câble de la paire de câbles supraconducteurs, causée par une variation de température pour un passage à l'état supraconducteur, le dispositif de compensation comprenant une extrémité d'entrée configurée pour recevoir le coeur du premier câble et une extrémité de sortie connectée à l'un desdits ports de connexion de manière à délivrer le coeur du premier câble vers le dispositif de jonction, le dispositif de compensation comportant un tube intérieur et un tube extérieur coaxiaux entre lesquels une isolation par le vide est prévue, le tube intérieur étant configuré pour recevoir le coeur du premier câble supraconducteur et un fluide de refroidissement destiné à refroidir ledit coeur à une température de refroidissement pour un état supraconducteur, lesdits tubes intérieur et extérieur présentant au moins une courbure d'un angle supérieur ou égal à 90,
installation dans laquelle les axes des courbures des dispositifs de compensation sont parallèles entre eux.

L'invention concerne également un ensemble de connexion configuré pour connecter deux câbles supraconducteurs de manière à réaliser une liaison de transmission, chaque câble supraconducteur comprenant un coeur de câble entouré d'une enveloppe cryogénique, ledit ensemble comprenant :
- un dispositif de jonction comprenant deux ports de connexion, chaque port de connexion étant configuré pour recevoir le coeur de câble d'un respectif des deux câbles supraconducteurs, et
- au moins un dispositif de compensation configuré pour absorber une variation de longueur du coeur d'un premier câble de la paire de câbles supraconducteurs, causée par une variation de température pour un passage à l'état supraconducteur,
le dispositif de compensation comprenant une extrémité d'entrée configurée pour recevoir le coeur du premier câble et une extrémité de sortie connectée à l'un desdits ports de connexion de manière à délivrer le coeur du premier câble vers le dispositif de jonction, le dispositif de compensation comportant un tube intérieur et un tube extérieur coaxiaux entre lesquels une isolation par le vide est prévue, le tube intérieur étant configuré pour recevoir le coeur du premier câble supraconducteur et un fluide de refroidissement destiné à refroidir ledit coeur à une température de refroidissement pour un état supraconducteur, lesdits tubes intérieur et extérieur présentant une courbure d'un angle égal à 90°.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
- la figure 1 représente schématiquement une vue d'un premier exemple d'ensemble de connexion ;
- la figure 2 représente schématiquement une vue du premier exemple d'ensemble de connexion ;
- la figure 3 représente schématiquement une vue du premier exemple d'ensemble de connexion ;
- la figure 4 représente schématiquement un exemple de dispositif de jonction ;
- la figure 5 représente schématiquement un autre exemple de dispositif de jonction ;
- la figure 6 représente schématiquement un exemple de dispositif de compensation ;
- la figure 7 représente schématiquement un exemple de dispositif de compensation ;
- la figure 8 représente schématiquement un exemple de dispositif de compensation ;
- la figure 9 est un schéma explicatif d'un exemple de dispositif de compensation ;
- la figure 10 est un schéma explicatif d'un exemple de dispositif de jonction ;
- la figure 11 représente schématiquement une vue d'un deuxième exemple d'ensemble de connexion ;
- la figure 12 représente schématiquement une vue du deuxième exemple d'ensemble de connexion ;
- la figure 13 représente schématiquement une vue du deuxième exemple d'ensemble de connexion ;
- la figure 14 représente schématiquement une vue d'un troisième exemple d'ensemble de connexion ;
- la figure 15 représente schématiquement une vue du troisième exemple d'ensemble de connexion ;
- la figure 16 représente schématiquement une vue d'un quatrième exemple d'ensemble de connexion ;
- la figure 17 représente schématiquement une vue du quatrième exemple d'ensemble de connexion ;
- la figure 18 représente schématiquement une vue d'un cinquième exemple d'ensemble de connexion ;
- la figure 19 représente schématiquement une vue du cinquième exemple d'ensemble de connexion ;
- la figure 20 représente schématiquement une vue du cinquième exemple d'ensemble de connexion ;
- la figure 21 représente schématiquement une vue d'un sixième exemple d'ensemble de connexion ;
- la figure 22 représente schématiquement une vue du sixième exemple d'ensemble de connexion ;
- la figure 23 représente schématiquement une vue du sixième exemple d'ensemble de connexion ;
- la figure 24 représente schématiquement une vue d'un septième exemple d'ensemble de connexion ;
- la figure 25 représente schématiquement une vue du septième exemple d'ensemble de connexion ;
- la figure 26 représente schématiquement une vue d'un huitième exemple d'ensemble de connexion ;
- la figure 27 représente schématiquement une vue du huitième exemple d'ensemble de connexion ;
- la figure 28 représente schématiquement une vue du huitième exemple d'ensemble de connexion ;
- la figure 29 est schéma explicatif d'un exemple d'ensemble de connexion ;
- la figure 30 représente schématiquement une vue d'un neuvième exemple d'ensemble de connexion ;
- la figure 31 représente schématiquement une vue du neuvième exemple d'ensemble de connexion ;
- la figure 32 représente schématiquement une vue d'autre exemple d'ensemble de connexion ;
- la figure 33 représente schématiquement une vue de dessus d'un exemple d'installation ;
- la figure 34 représente schématiquement une vue de côté de l'exemple d'installation de la figure 33 ;
- la figure 35 représente schématiquement une vue de côté d'un exemple d'installation ;
- la figure 36 représente schématiquement une vue de dessus de l'exemple d'installation de la figure 35 ;
- la figure 37 représente schématiquement une vue de côté d'un exemple d'installation ;
- la figure 38 représente schématiquement une vue de dessus de l'exemple d'installation de la figure 38 ;
- la figure 39 représente schématiquement une vue de côté d'un exemple d'installation ;
- la figure 40 représente schématiquement une vue de dessus de l'exemple d'installation de la figure 39.

### Description détaillée

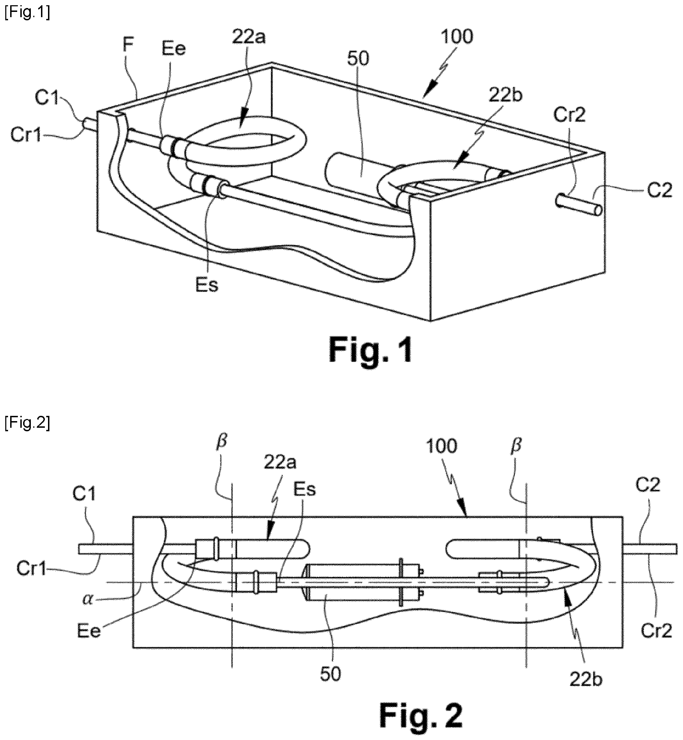

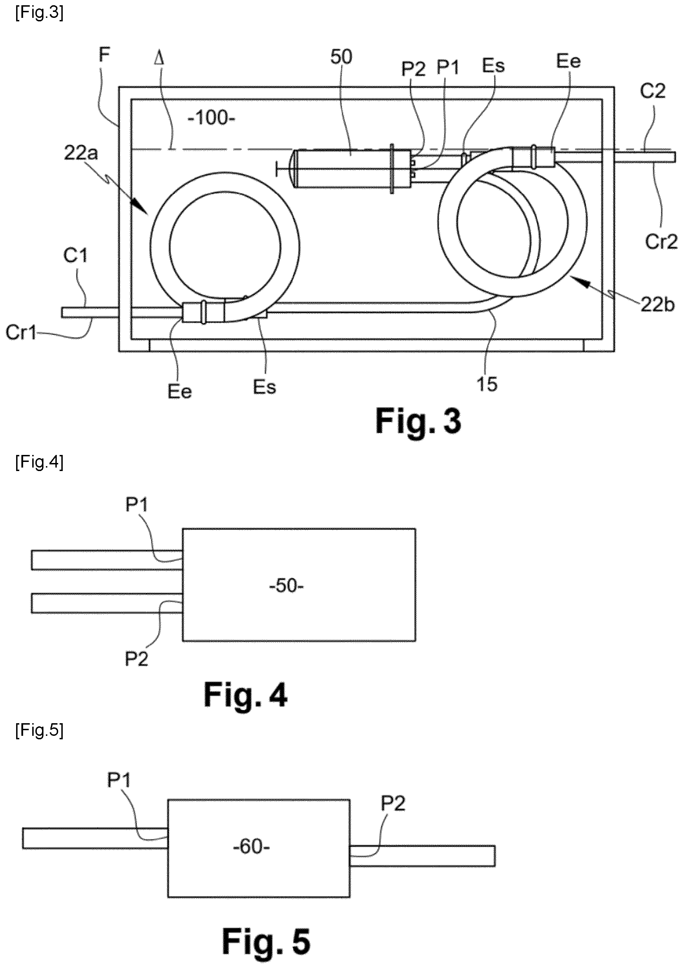

Un premier exemple d'ensemble de connexion 100 selon l'invention est représenté par la figure 1 qui en présente une vue en perspective. Selon les conventions de la figure 1, la figure 2 en présente une vue sur le côté et la figure 3 une vue du dessus.

L'ensemble de connexion 100 permet de connecter deux câbles supraconducteurs C1, C2 de manière à réaliser une liaison de transmission. Chaque câble supraconducteur C1, C2 comprend un coeur de câble entouré d'une enveloppe cryogénique Cr1, Cr2. La liaison de transmission permet notamment la communication d'une information ayant pour support le signal transmis par les câbles C1, C2 qui la composent. Le signal transmis par les câbles C2, C2 est notamment un courant électrique. Les câbles supraconducteurs sont en particulier connectés en série.

Un dispositif de jonction 50 permet de joindre ensemble les câbles supraconducteurs C1, C2. Le dispositif de jonction 50 comprend deux ports de connexion P1, P2. Un premier port de connexion P1 reçoit le coeur de câble d'un premier câble supraconducteur C1 ; un deuxième port de connexion P2 reçoit le coeur de câble d'un deuxième câble supraconducteur C2.

En particulier, dans le dispositif de jonction 50, les coeurs de câble des câbles supraconducteurs C1, C2, notamment les parties supraconductrices, sont connectées électriquement entre elles. Notamment, le dispositif de jonction permet de joindre entre elles les enveloppes cryogéniques des câbles supraconducteurs C1, C2 pour une continuité de la circulation du fluide cryogénique.

L'ensemble de connexion comprend deux dispositifs de compensation 22a, 22b qui absorbent les variations de longueur des coeurs de câble causées par une variation de température pour un passage à l'état supraconducteur. Chaque dispositif de compensation 22a, 22b comprend une extrémité d'entrée Ee configurée pour recevoir le coeur de câble et une extrémité de sortie Es connectée au port de connexion P1, P2 respectif pour délivrer le coeur de câble vers le dispositif de jonction 50.

Ainsi, la rétractation liée au refroidissement pour le passage à l'état supraconducteur du premier câble C1 et du deuxième câble C2 est gérée à proximité immédiate du dispositif de jonction 50. En prévoyant, le dispositif de jonction 50 et les dispositifs de compensation 22a, 22b dans un seul ensemble 100, on permet leur intégration dans un seul espace, ce qui facilite leur intégration dans un système de câbles supraconducteurs.

Dans le premier exemple d'ensemble de connexion 100, les ports de connexion P1, P2, du dispositif de jonction 50 sont situés à une même extrémité du dispositif de jonction 50. La figure 4 représente schématiquement le dispositif de compensation 50 dans lequel les coeurs de câble des câbles C1, C2 sont connectés aux ports de connexion P1, P2.

En particulier, des extrémités respectives des coeurs de câble viennent côte à côté dans le dispositif de jonction 50, pour être jointes de manière à réaliser une connexion électrique. Le dispositif de jonction 50 peut comprendre une enveloppe cryogénique qui permet de refroidir les extrémités des coeurs de câble pour un état supraconducteur. L'enveloppe cryogénique du dispositif de jonction 50 est notamment connectée à une enveloppe cryogénique de chaque dispositif de compensation 22a, 22b via les ports de connexion P1 et P2, de manière à réaliser une continuité du fluide de refroidissement.

Cependant, le dispositif de jonction peut avoir une configuration différente. La figure 5 représente schématiquement un autre dispositif de jonction 60 dans lequel les coeurs de câble des câbles C1, C2 sont connectés aux ports de connexion P1, P2. Le dispositif de jonction 60 de la figure à 5 est identique à celui illustré en figure 4, si ce n'est que les ports de connexion P1, P2 du dispositif de jonction 60 sont situés à des extrémités opposées du dispositif de jonction 60.

Notamment, une direction longitudinale du dispositif de jonction 50, 60 est une direction suivant laquelle les coeurs de câble s'étendent dans le dispositif de jonction depuis une extrémité du dispositif de jonction 50, 60.

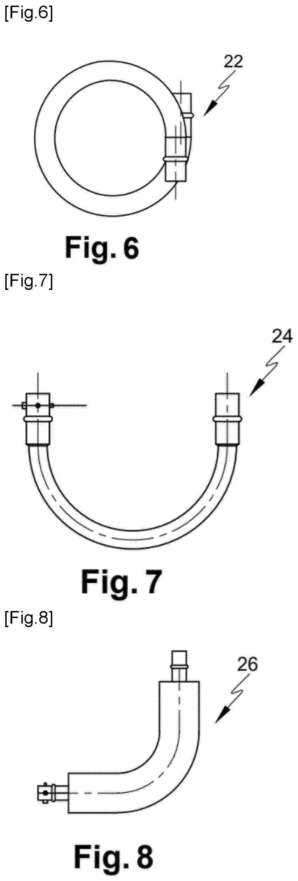

Notamment, le dispositif de compensation 22a,22b comprend un tube intérieur et un tube extérieur coaxiaux décrivant une courbure d'angle 360°. Le dispositif de compensation 22a, 22b est par exemple illustré en figure 6.

Cependant, le dispositif de compensation peut présenter un angle différent, supérieur ou égal à 90°. Le dispositif peut avoir un angle de 180° comme par exemple illustré en figure 7, ou un angle de 90° comme par exemple illustré en figure 8. En particulier, le dispositif de compensation est tel que décrit dans la publication de demande de brevet US 2019/0260194 A1.

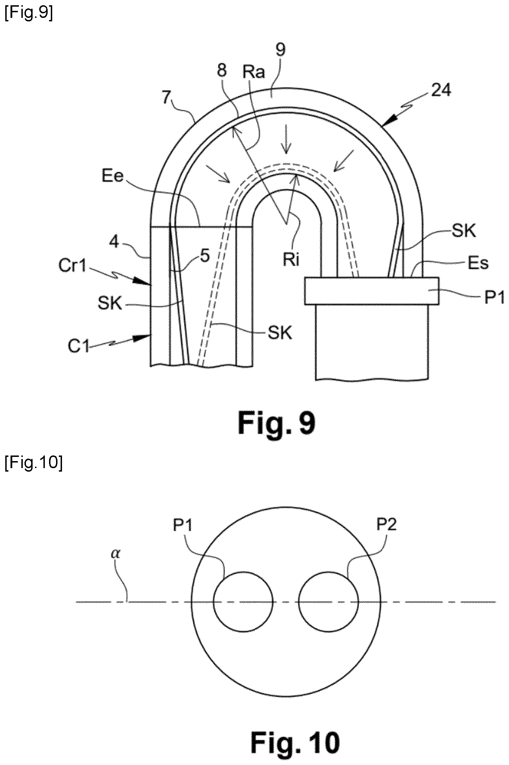

La figure 9 représente un exemple de dispositif de compensation 24 ayant une courbure d'angle 180°. Le dispositif de compensation 24 comprend un tube intérieur 8 et un tube extérieur 7 coaxiaux. De façon connue en soi, une isolation par le vide en prévue entre le tube intérieur 8 et le tube extérieur 7. Le tube intérieur 8 reçoit le coeur SK du câble supraconducteur. Un fluide de refroidissement circule dans le tube intérieur 8 pour refroidir le coeur SK à une température de refroidissement pour un état supraconducteur.

Les dimensions des tubes intérieur 8 et extérieur 7 sont configurées de sorte que, à température ambiante, le coeur SK de câble est à proximité d'une portion de la paroi interne du tube intérieur 8 ayant le rayon de courbure Ra le plus grand ; et à température de refroidissement, le coeur SK de câble est à proximité d'une portion de la paroi interne du tube intérieur Ri ayant un rayon de courbure le plus petit. Notamment, le diamètre interne du tube intérieur 8 est suffisamment grand pour permettre ce déplacement du coeur de câble SK.

Le dispositif de compensation 24 peut comprendre une partie rectiligne à une extrémité de la courbure, comme par exemple à l'extrémité à droite en figure 9. L'extrémité de la partie rectiligne forme alors l'extrémité du dispositif de compensation, notamment l'extrémité de sortie Es. Alternativement, une extrémité de la courbure du dispositif de compensation 24 peut venir directement contre la contrepartie (câble supraconducteur C1 ou port de connexion P1), comme par exemple à l'extrémité à gauche en figure 9. L'extrémité de la courbure forme alors l'extrémité du dispositif de compensation, notamment l'extrémité d'entrée Ee.

Notamment, l'angle de la courbure est l'angle parcouru par le rayon de courbure depuis le début de la courbure jusqu'à la fin de la courbure.

En particulier, à l'une de leurs extrémités, les tubes 7, 8 se connectent à l'enveloppe cryogénique Cr1 du câble C1. Notamment, le tube intérieur 8 est solidarisé avec un tube intérieur 5 de l'enveloppe cryogénique Cr1 du câble C1 ; et le tube extérieur 7 est solidarisé avec un tube extérieur 4 de l'enveloppe cryogénique Cr1 du câble C1. De manière similaire, à l'autre extrémité, les tubes 7, 8 peuvent se connecter à une enveloppe cryogénique du dispositif de jonction.

En faisant référence à nouveau aux figures 1 à 3, dans l'ensemble de connexion 100, les courbures sont notamment logées dans un espace délimité par un côté du dispositif de jonction 50, notamment un côté longitudinal du dispositif de jonction 50. L'espace est en particulier délimité par un plan tangent au côté longitudinal du dispositif de jonction 50, matérialisé en figure 3 par une droite Δ. Grâce à cet agencement, l'encombrement de l'ensemble de connexion est limité, notamment suivant une direction perpendiculaire au plan tangent au côté du dispositif de jonction 50.

Les courbures des dispositifs de compensation 22a, 22b sont en particulier agencées de sorte que leurs axes β sont parallèles entre eux. Notamment, l'axe d'une courbure correspond à la droite contenant le centre du rayon de courbure autour de laquelle la courbure s'étend. Ainsi, l'encombrement des dispositifs de compensation 22a, 22b est réduit.

Notamment, les courbures des dispositifs de compensation 22a, 22b sont situées en vis-à vis le long de la direction longitudinale du dispositif de jonction 50, ce qui permet de limiter encore l'encombrement de l'ensemble de connexion 100.

Notamment, le premier dispositif de compensation 22a a une courbure d'angle 360°et son extrémité de sortie Es est orientée vers le même côté que le premier port de connexion P1 auquel le coeur du premier câble C1 est connecté. L'ensemble de connexion 100 comprend un élément de rattrapage 15 en forme de U qui permet de relier l'extrémité de sortie Es du premier dispositif de connexion 22a au premier port de connexion P1. L'élément de rattrapage 15 peut aussi comprendre une partie rectiligne entre l'extrémité de sortie Es et la portion en forme de U. Cette partie rectiligne permet notamment de s'assurer que la portion en forme de U est située à une position le long de la direction longitudinale α qui permette une connexion avec le premier port de connexion P1. Le dispositif de rattrapage 15 est particulièrement avantageux dans une installation de câbles supraconducteurs dans laquelle les câbles supraconducteurs C1, C2 arrivent dans une fosse de jonction F depuis deux côtés opposés de la fosse F. L'élément de rattrapage 15 comprend notamment une enveloppe cryogénique en liaison avec les enveloppes cryogéniques du premier dispositif de compensation 22a et du dispositif de jonction 50, l'enveloppe cryogénique de l'élément de rattrapage 15 recevant le coeur du premier câble C1.

La figure 10 représente une vue schématique du dispositif de compensation 50 selon une coupe transversale, c'est-à-dire notamment selon un plan perpendiculaire à la direction longitudinale du dispositif de compensation 50. Un plan transversal central est notamment un plan comprenant une direction longitudinale du dispositif de compensation 50 et séparant un port de connexion P1, P2 en deux parties égales. Le plan transversal central commun aux deux ports de connexion P1, P2 est notamment représenté par la droite α. En particulier, lors de l'installation de l'ensemble de connexion 100, le dispositif de jonction 50 est monté de sorte que le plan transversal central α est horizontal. Cela facilite les opérations de montage des coeurs de câble dans les ports de connexion P1, P2 et leur connexion mutuelle au sein du dispositif de jonction 50.

En particulier, les axes des courbures des dispositifs de compensation 22a, 22b sont perpendiculaires au plan transversal central commun α des ports de connexion P1, P2 du dispositif de jonction 50. Notamment, en ayant leurs axes perpendiculaires au plan transversal central commun α des deux ports de connexion P1, P2, les courbures des dispositifs de compensation 22a, 22b s'étendent principalement suivant l'horizontale et ont un encombrement limité suivant la verticale. Cet agencement est particulièrement adapté lorsque l'ensemble de connexion 100 est installé dans une fosse de jonction F dont les dimensions sont plus contraintes en profondeur qu'en largeur. L'ensemble de connexion 100 est de préférence agencé de sorte que la direction longitudinale du dispositif de jonction 50 est parallèle à la direction d'arrivée des câbles C1, C2.

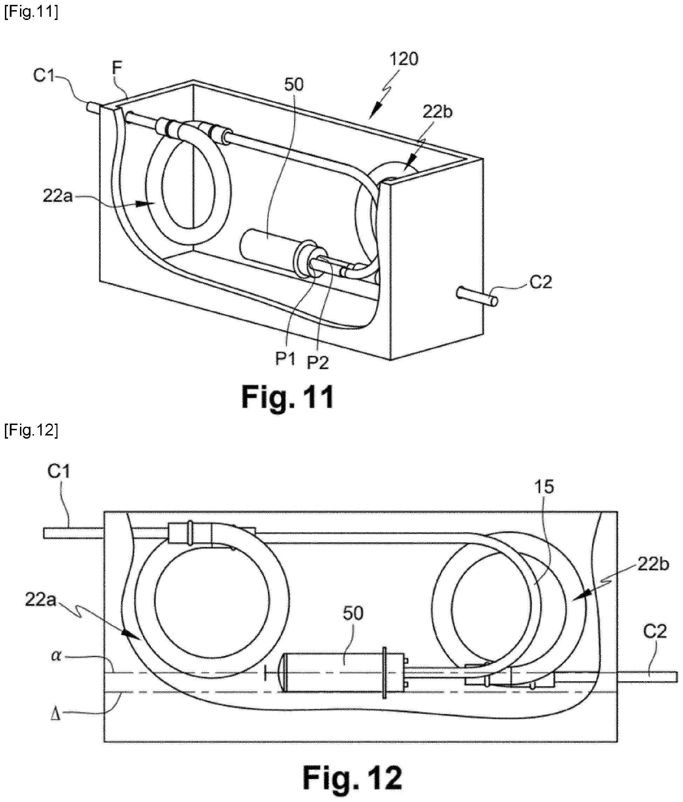

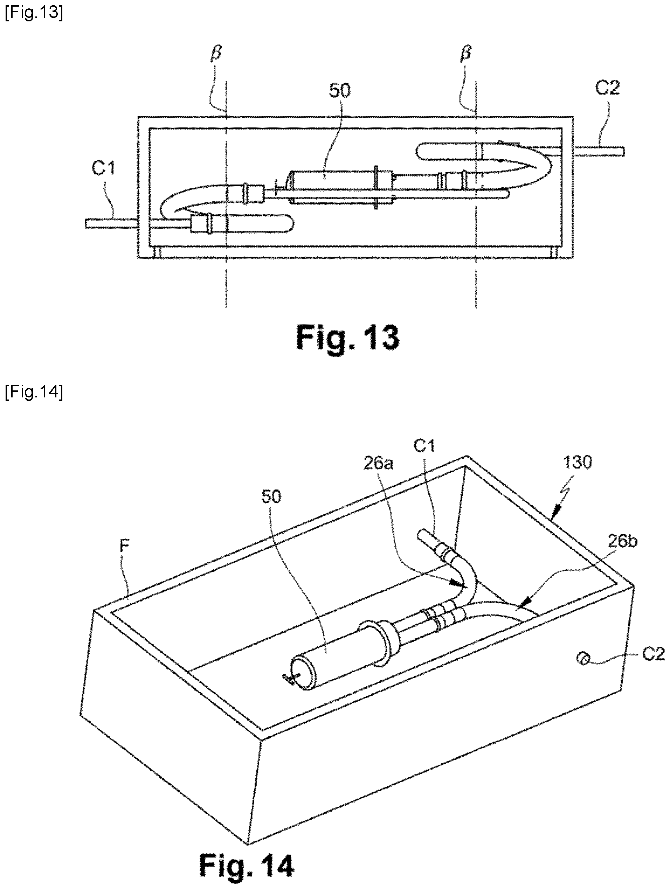

La figure 11 illustre une vue en perspective d'un deuxième exemple 120 d'ensemble de connexion. Selon les conventions de la figure 11, la figure 12 en présente une vue sur le côté et la figure 13 une vue du dessus.

Le deuxième exemple 120 d'ensemble de connexion est identique au premier exemple 110, si ce n'est que les courbures des dispositifs de compensation 22a, 22b sont de part et d'autre d'un plan médian du dispositif de jonction 50 et que les axes β des courbures sont parallèles au plan transversal central commun α des ports de connexion P1, P2 du dispositif de jonction 50. Notamment, en ayant leurs axes parallèles au plan transversal central α commun aux deux ports de connexion P1, P2, les courbures des dispositifs de compensation 22a, 22b s'étendent principalement suivant la verticale et ont un encombrement limité suivant l'horizontale. Cet agencement est particulièrement adapté lorsque l'ensemble de connexion 120 est installé dans une fosse de jonction F dont les dimensions sont plus contraintes en largeur qu'en profondeur. L'ensemble de connexion 120 est de préférence agencé de sorte que la direction longitudinale du dispositif de jonction 50 est parallèle à la direction d'arrivée des câbles C1, C2.

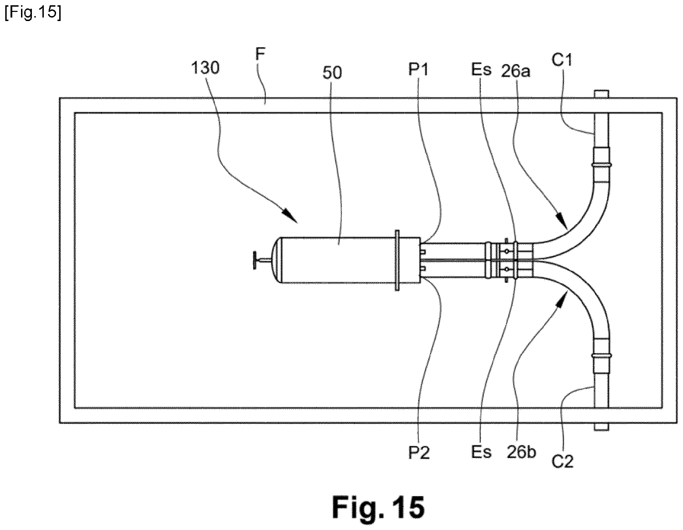

La figure 14 illustre une vue en perspective d'un troisième exemple 130 d'ensemble de connexion. Selon les conventions de la figure 14, la figure 15 en présente une vue du dessus. Le troisième exemple 130 d'ensemble de connexion est identique au premier exemple 100, si ce n'est qu'il comprend deux dispositifs de compensation 26a, 26b ayant un angle de 90°. Notamment, les courbures des dispositifs de compensation 26a, 26b sont situées sensiblement en vis-à vis le long d'une direction perpendiculaire à la direction longitudinale du dispositif de jonction 50.

Cet agencement est particulièrement adapté lorsque l'ensemble de connexion 130 est installé dans une fosse de jonction F dans laquelle les câbles supraconducteurs C1, C2 arrivent dans la fosse F au niveau de côtés opposés de la fosse F, et où la fosse de jonction présente moins de contraintes d'encombrement suivant une direction perpendiculaire à la direction d'arrivée des câbles C1, C2. L'ensemble de connexion 130 est de préférence agencé de sorte que la direction longitudinale du dispositif de jonction 50 est perpendiculaire à la direction d'arrivée des câbles C1, C2.

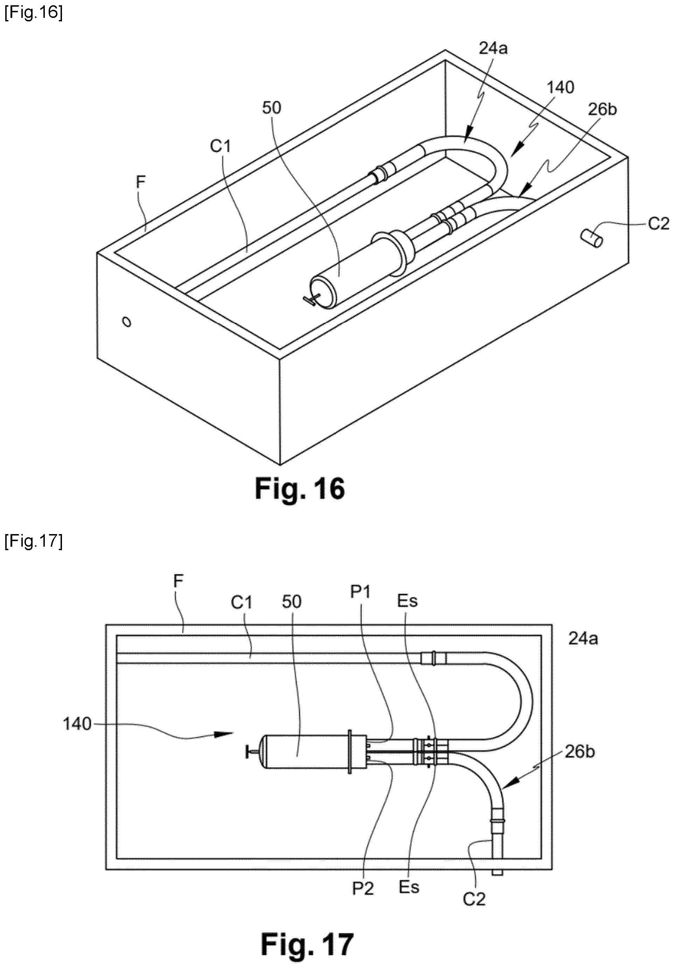

La figure 16 illustre une vue en perspective d'un quatrième exemple 140 d'ensemble de connexion. Selon les conventions de la figure 16, la figure 17 en présente une vue du dessus. Le quatrième exemple 140 d'ensemble de connexion est identique au troisième exemple 130, si ce n'est qu'il comprend un premier dispositif de compensation 24a ayant un angle de 180° et un deuxième dispositif de compensation 26b ayant un angle de 90°.

Cet agencement est particulièrement adapté lorsque l'ensemble de connexion 140 est installé dans une fosse de jonction F dans laquelle les câbles supraconducteurs C1, C2 arrivent au niveau de côtés contigus de la fosse F, notamment lorsque les câbles arrivent avec un angle entre eux non négligeable, en particulier de 90°. L'ensemble de connexion 140 est de préférence agencé de sorte que la direction longitudinale du dispositif de jonction 50 est parallèle à la direction d'arrivée du premier câble C1 qui est connecté au premier dispositif de compensation 24a.

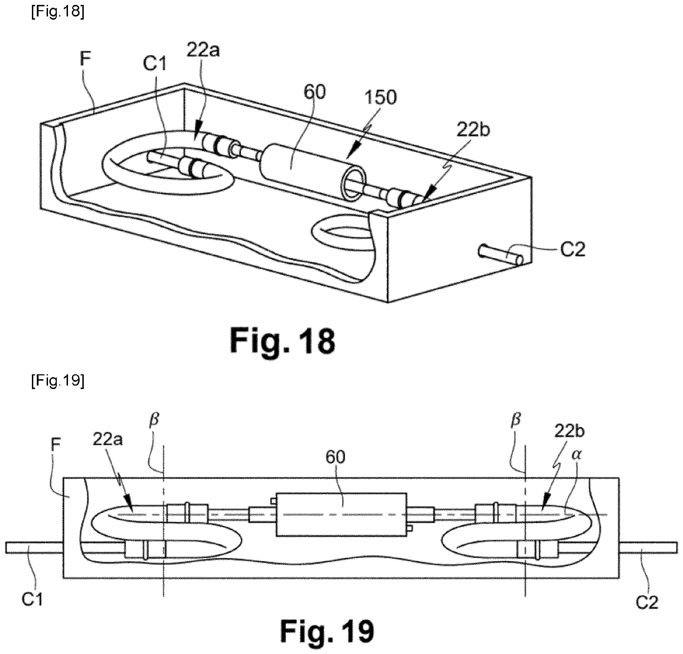

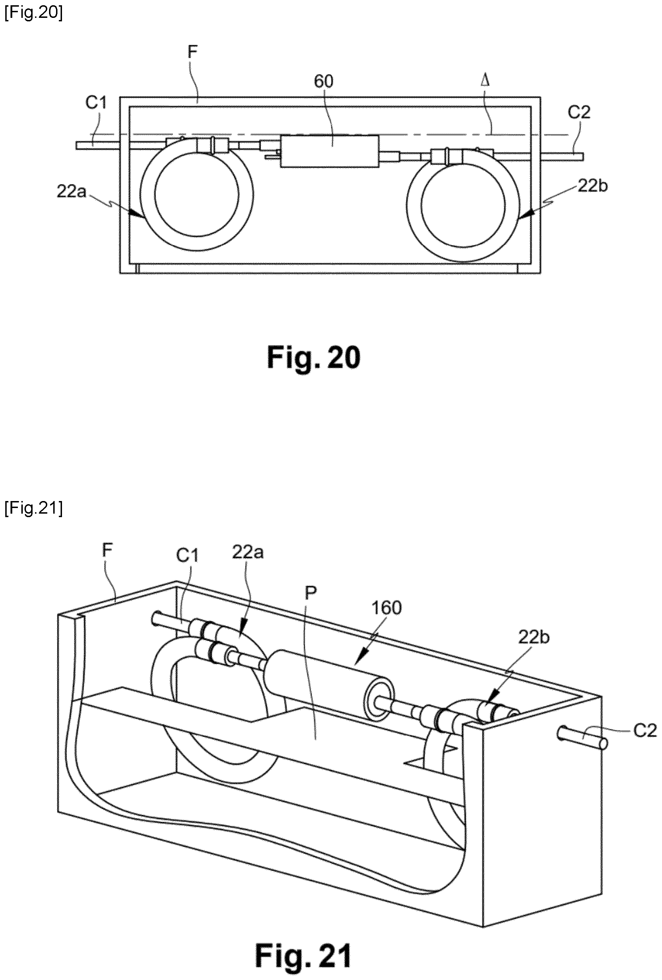

Un cinquième exemple d'ensemble de connexion 150 selon l'invention est représenté par la figure 18 qui en présente une vue en perspective. Selon les conventions de la figure 18, la figure 19 en présente une vue sur le côté et la figure 20 une vue du dessus.

L'ensemble de connexion 150 permet de connecter deux câbles supraconducteurs C1, C2 de manière à réaliser une liaison de transmission, déjà décrite en relation avec le premier exemple 100. Les câbles C1, C2 sont identiques à ceux décrits en relation avec le premier exemple 100.

Dans ce cinquième exemple d'ensemble de connexion 150, les ports de connexion P1, P2, du dispositif de jonction 60 sont situés à des extrémités opposées du dispositif de jonction. Le dispositif de jonction 60 est notamment tel que décrit précédemment en relation avec la figure 5.

L'ensemble de connexion 150 comprend deux dispositifs de compensation 22a, 22b qui absorbent les variations de longueur des coeurs de câble causées par une variation de température pour un passage à l'état supraconducteur. Notamment, les dispositifs de compensation 22a, 22b ont chacun un angle de 360°. En particulier, les dispositifs de compensation 22a, 22b sont tels que décrits précédemment en relation avec la figure 6. Les dispositifs de compensation peuvent cependant présenter des angles différents, par exemple comme décrit dans le premier exemple d'ensemble de connexion 100.

Les courbures des dispositifs de compensation 22a, 22b sont notamment logées dans un espace délimité par un côté du dispositif de jonction 60, notamment un côté longitudinal du dispositif de jonction 60. L'espace est en particulier délimité par un plan tangent au côté longitudinal du dispositif de jonction 60, matérialisé en figure 20 par la droite Δ. Grâce à cet agencement, l'encombrement de l'ensemble de connexion est limité, notamment suivant une direction perpendiculaire au plan tangent au côté du dispositif de jonction 60.

Notamment, les courbures des dispositifs d'encombrement 22a, 22b sont situées en vis-à vis le long de la direction longitudinale du dispositif de jonction 60, ce qui permet de limiter encore l'encombrement de l'ensemble de connexion 150.

En particulier, les axes des courbures des dispositifs de compensation 22a, 22b sont perpendiculaires au plan transversal central commun α (déjà décrit en relation avec la figure 10) des ports de connexion P1, P2 du dispositif de jonction 60. L'ensemble de connexion 150 est de préférence agencé de sorte que la direction longitudinale du dispositif de jonction 60 est parallèle à la direction d'arrivée des câbles C1, C2.

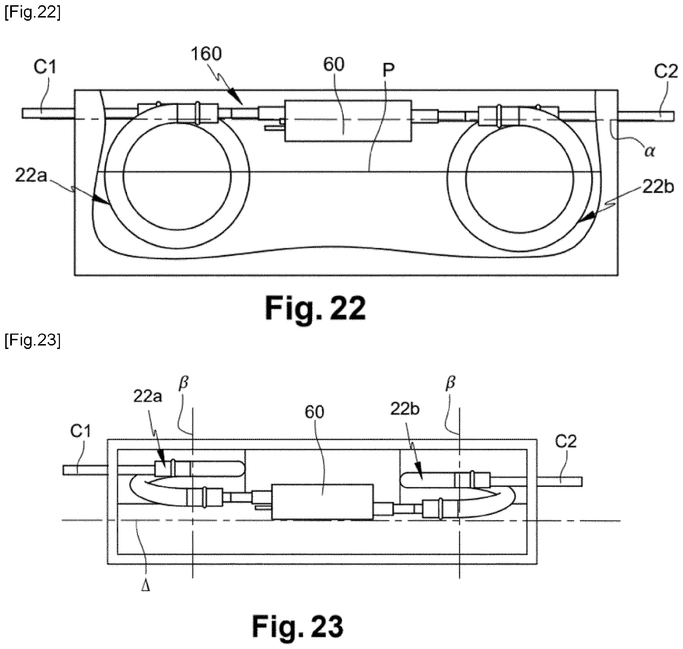

La figure 21 illustre une vue en perspective d'un sixième exemple 160 d'ensemble de connexion. Selon les conventions de la figure 21, la figure 22 en présente une vue sur le côté et la figure 23 une vue du dessus.

Le sixième exemple 160 d'ensemble de connexion est identique au cinquième exemple 150 si ce n'est que les axes β des courbures des dispositifs de compensations 22a, 22b sont parallèles au plan transversal commun α des ports de connexion P1, P2 du dispositif de jonction 60. Notamment, en ayant leurs axes parallèles au plan transversal central α commun aux deux ports de connexion P1, P2, les courbures des dispositifs de compensation 22a, 22b s'étendent principalement suivant la verticale et ont un encombrement limité suivant l'horizontale. L'ensemble de connexion 160 est de préférence agencé de sorte que la direction longitudinale du dispositif de jonction 60 est parallèle à la direction d'arrivée des câbles C1, C2. Une plateforme P peut être montée dans la fosse F recevant l'ensemble de connexion 160 pour permettre à des opérateurs d'accéder au dispositif de jonction 60 pour réaliser la jonction entre les câbles C1, C2.

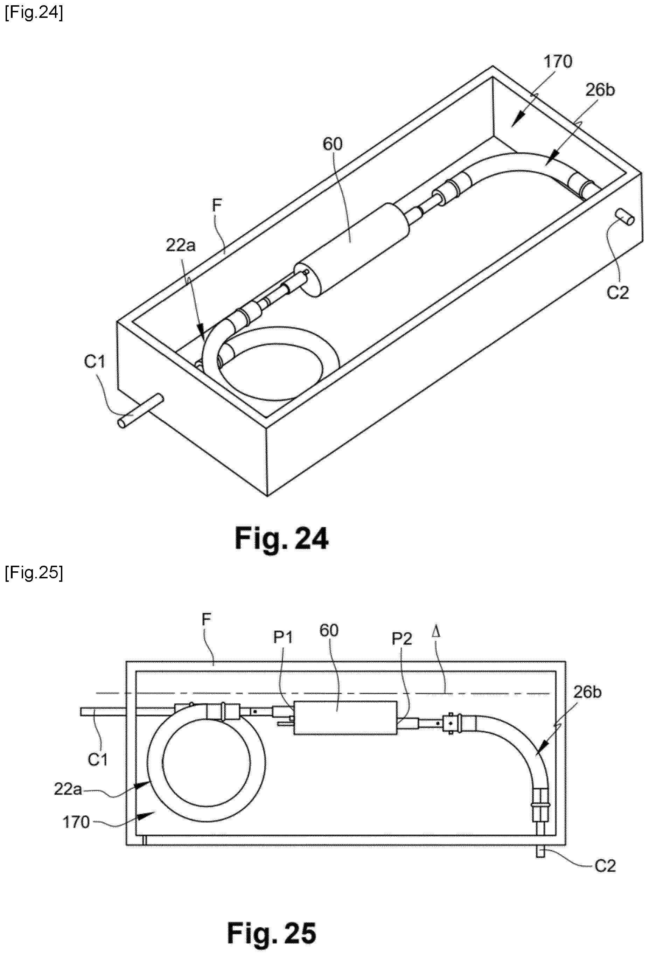

La figure 24 illustre une vue en perspective d'un septième exemple 170 d'ensemble de connexion. Selon les conventions de la figure 24, la figure 25 en présente une vue du dessus. Le septième exemple 140 d'ensemble de connexion est identique au cinquième exemple 150, si ce n'est qu'il comprend un premier dispositif de compensation 22a ayant un angle de 360° et un deuxième dispositif de compensation 26b ayant un angle de 90°.

Cet agencement est particulièrement adapté lorsque l'ensemble de connexion 170 est installé dans une fosse de jonction F dans laquelle les câbles supraconducteurs C1, C2 arrivent au niveau de côtés contigus de la fosse F, notamment lorsque les câbles arrivent avec un angle entre eux non négligeable, en particulier de 90°. L'ensemble de connexion 170 est de préférence agencé de sorte que la direction longitudinale du dispositif de jonction 60 est parallèle à la direction d'arrivée du premier câble C1 qui est connecté au premier dispositif de compensation 22a.

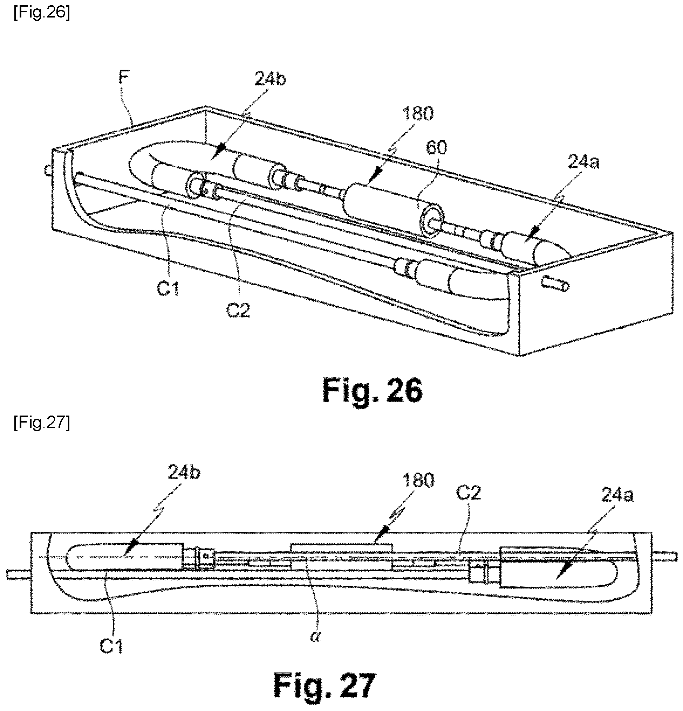

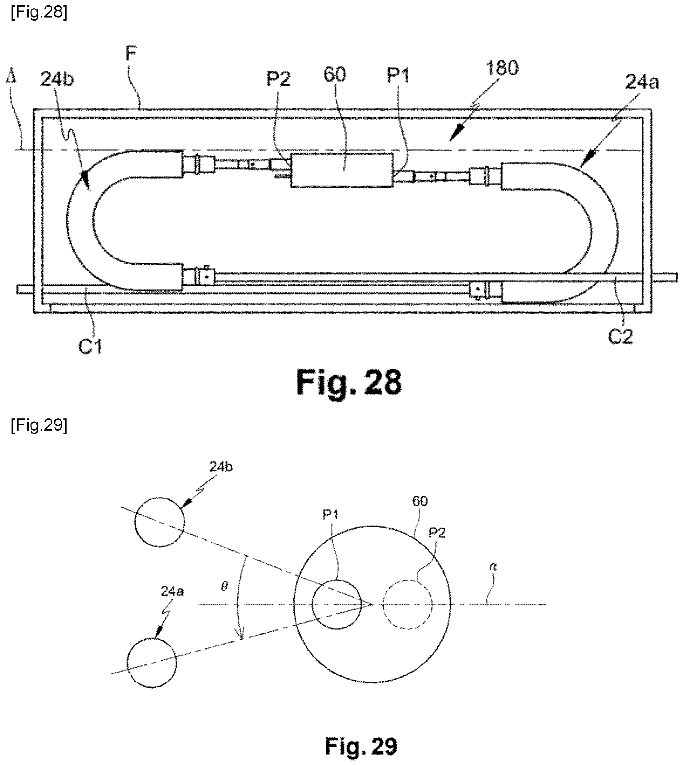

La figure 26 illustre une vue en perspective d'un huitième exemple 180 d'ensemble de connexion. Selon les conventions de la figure 26, la figure 27 en présente une vue sur le côté et la figure 28 une vue du dessus. La figure 29 représente une vue de coupe schématique de l'ensemble de connexion 180.

Le huitième exemple 180 d'ensemble de connexion est identique au cinquième exemple 150, si ce n'est qu'il comprend un premier dispositif de compensation 24a ayant un angle de 180° et un deuxième dispositif de compensation 24b ayant un angle de 180° qui sont en vis-à vis le long de la direction longitudinale du dispositif de jonction 60. Les courbures des dispositifs de compensation 24a, 24b présentent entre elles un faible décalage angulaire Θ de manière à laisser passer les câbles C1, C2 connectés aux dispositifs de compensation 24a, 24b. En particulier, le décalage angulaire Θ est un radian mesuré par rapport à la direction longitudinale du dispositif de jonction 60. Ainsi, l'encombrement de l'ensemble de connexion 180 est limité tout en permettant une connexion des câbles C1, C2 à leur dispositif de compensation 24a, 24b respectif. En particulier, le décalage angulaire Θ est fonction du diamètre des câbles C1, C2 ou du diamètre des tubes du dispositif de compensation. Notamment il est compris entre quelques degrés, par exemple 1°, et 45°, voire entre 5° et 20°.

En particulier, comme illustré en figure 29, le plan transversal central commun α des ports de connexion P1, P2 du dispositif de jonction 60 traverse le décalage angulaire Θ entre les dispositifs de compensation 24a, 24b. Ainsi, lorsque l'ensemble de connexion 180 est monté dans la fosse F de sorte que le plan transversal commun α est horizontal, les courbures des dispositifs de compensation 24a, 24b s'étendent principalement suivant l'horizontale et ont un encombrement limité suivant la verticale.

Cet agencement est particulièrement adapté lorsque l'ensemble de connexion 180 est installé dans une fosse de jonction F dont les dimensions sont plus contraintes en profondeur qu'en largeur. Cet agencement est en outre particulièrement adapté lorsque l'ensemble de connexion 180 est installé dans une fosse de jonction F dans laquelle les câbles supraconducteurs C1, C2 arrivent au niveau de côtés opposés de la fosse F. L'ensemble de connexion 100 est de préférence agencé de sorte que la direction longitudinale du dispositif de jonction 60 est parallèle à la direction d'arrivée des câbles C1, C2.

Notamment, l'ensemble de connexion selon l'invention est modulable. Les dispositifs de jonction 50, 60 peuvent être combinés avec deux quelconque des dispositifs de compensation 22, 24, 26 ayant un angle quelconque supérieur ou égal à 90°, notamment tels que décrits précédemment. Ainsi, l'ensemble de connexion s'adapte au mieux à l'espace disponible dans la fosse de jonction F et/ou aux directions d'arrivée des câbles C1, C2 dans la fosse de jonction F.

Notamment, la fosse de jonction F définit un espace dans lequel les câbles supraconducteurs C1, C2 sont joints, en particulier par des opérateurs. La fosse de jonction F peut être délimitée par des parois, notamment latéralement, à sa base ou à son sommet. Les câbles C1, C2 sont notamment acheminés dans des conduits qui débouchent dans la fosse de jonction F.

Dans un mode de réalisation des exemples décrits précédemment, les câbles C1, C2 ont une première extrémité connectée au dispositif de compensation respectif de l'ensemble de connexion 100, 120, 130, 140, 150, 160, 170, 180 et une deuxième extrémité connectée à un autre dispositif de compensation, faisant notamment parti d'un autre ensemble de connexion ou étant connecté à une terminaison de liaison de transmission. Ainsi, pour chaque câble C1, C2 la rétractation due au refroidissement est gérée à chacune des extrémités du câbles. Ce faisant, la longueur à gérer par chaque dispositif de compensation est deux fois plus petite par rapport à un exemple où, pour chaque câble, un seul dispositif de compensation gérerait la rétractation à une extrémité du câble. En gérant la compensation à chaque extrémité des câbles C1, C2, les dispositifs de compensation sont relativement plus petits.

Ainsi, une installation de câbles supraconducteurs peut comprendre plusieurs des ensembles de connexion précédemment décrits, pour connecter en série une pluralité de câbles d'une liaison de transmission. Un câble connecté à deux ensembles de connexion successifs a alors sa première extrémité connectée à un dispositif de compensation du premier ensemble de connexion et sa deuxième extrémité connectée à un dispositif de compensation du deuxième ensemble de connexion.

Les exemples 100, 120, 130, 140, 150, 160, 170, 180 d'ensemble de connexion précédemment décrits comprennent deux dispositifs de compensation. Cependant, un autre ensemble de connexion pourrait comprendre un seul dispositif de compensation. Notamment, le dispositif de compensation est connecté au premier port de connexion P1. Le deuxième câble C2 est connecté, notamment directement, au deuxième port de connexion P2. Notamment, un tel ensemble de connexion est par ailleurs similaire aux exemples d'ensemble de connexion précédemment décrits, en particulier en ce qui concerne le dispositif de connexion et le dispositif de jonction. L'axe de la courbure du dispositif de compensation peut être parallèle ou perpendiculaire au plan transversal commun α des ports de connexion P1, P2 du dispositif de jonction 50, 60.

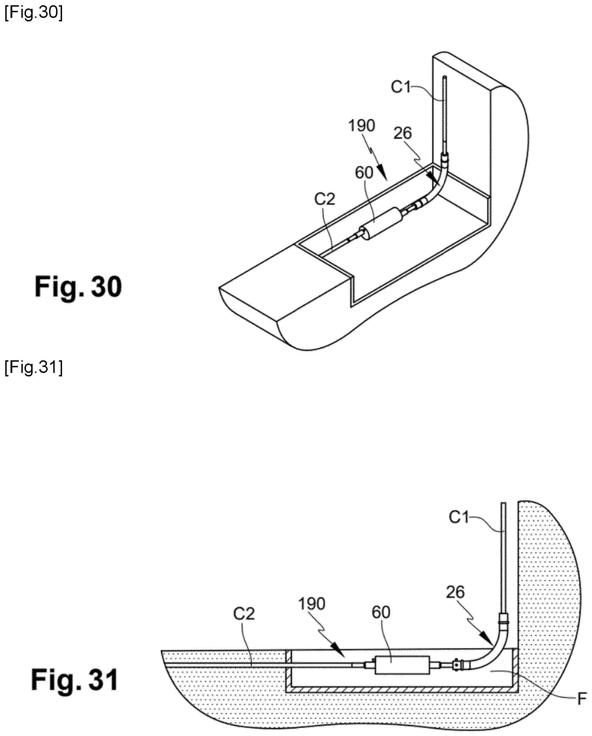

Les figures 30 et 31 illustrent un exemple 190 d'un tel ensemble connexion. L'ensemble de connexion 190 comprend un dispositif de de compensation 26 ayant un angle de 90°, précédemment décrit en relation avec la figure 8, qui se connecte à une extrémité d'un dispositif de jonction 60 précédemment décrit en relation avec la figure 5. Un câble C2 se connecte à l'extrémité opposée du dispositif de jonction 60. L'ensemble 190 est notamment reçu dans une fosse F. Cet exemple 190 d'ensemble de connexion est particulièrement adapté pour joindre un câble C1 descendant depuis une hauteur, par exemple un pont, pour se connecter à un câble C2, par exemple au sol.

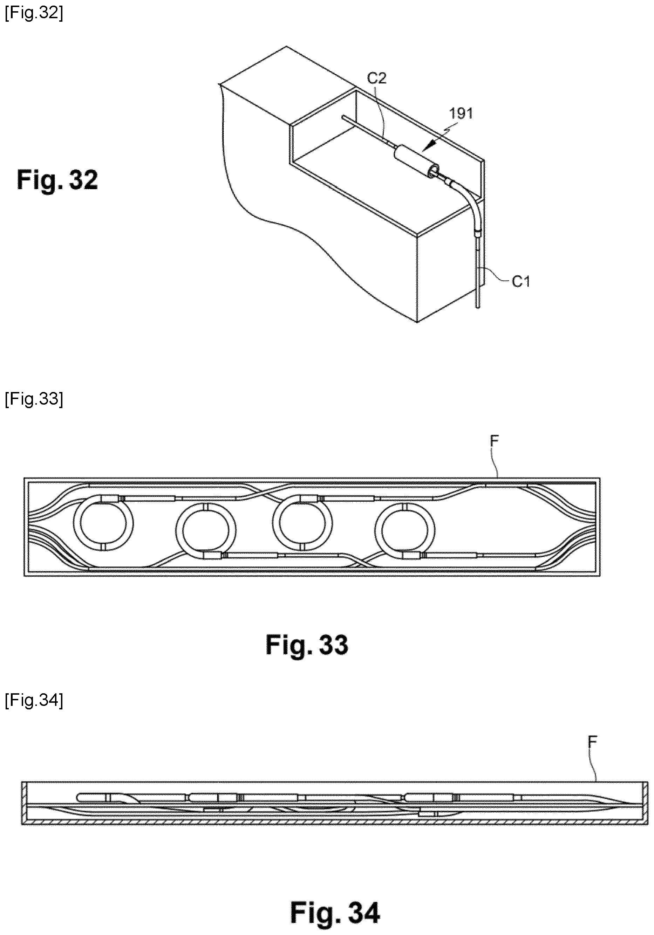

La figure 32 illustre un exemple 191 d'ensemble de connexion identique à l'exemple 190 précédemment décrit, si ce n'est l'orientation selon laquelle il est installé dans le système de câbles supraconducteurs C1, C2. En effet, cet exemple 191 d'ensemble de connexion est adapté pour joindre un câble C1 remontant depuis une hauteur basse, par exemple le sol, vers une hauteur supérieure, par exemple un pont, pour se connecter à un câble C2 se trouvant au niveau de la hauteur supérieure.

Une fosse de jonction peut comprendre plusieurs ensembles de connexion tels que décrits précédemment. C'est notamment le cas lorsque plusieurs paires de câbles arrivent dans la fosse F pour être connectées par des ensembles de connexion respectifs. Par exemple, pour un système à courant continu, un câble est au potentiel positif, un autre est au potentiel négatif. Les deux câbles arrivent dans la fosse F pour être joints à leurs contreparties via deux ensembles de connexion. Dans un autre exemple de système à courant alternatif triphasé, chaque phase est transmise par un câble respectif. Les trois phases arrivent dans la fosse F pour être connectées à leurs contreparties via trois ensembles de connexion.

De préférence, les courbures des dispositifs de compensation ont des axes parallèles entre eux pour limiter l'encombrement dans la fosse de jonction F, comme par exemple illustrés dans les figures.

Des exemples d'installation comprenant plusieurs ensembles de connexion vont être décrits en faisant référence aux figures 33 à 40.

De préférence, pour limiter l'encombrement, les dispositifs de jonction sont tous alignés suivant une même direction longitudinale. En particulier, les plans transversaux commun α des dispositifs de jonction sont parallèles entre eux.

De préférence, les axes des courbures des dispositifs de compensation sont parallèles au plan transversal commun α des ports de connexion P1, P2 des dispositifs de connexion.

De préférence, les courbures d'au moins une partie des dispositifs de compensation sont en vis-à-vis selon la direction longitudinale commune aux dispositifs de jonction, comme par exemple illustré en figures 33 à 36.

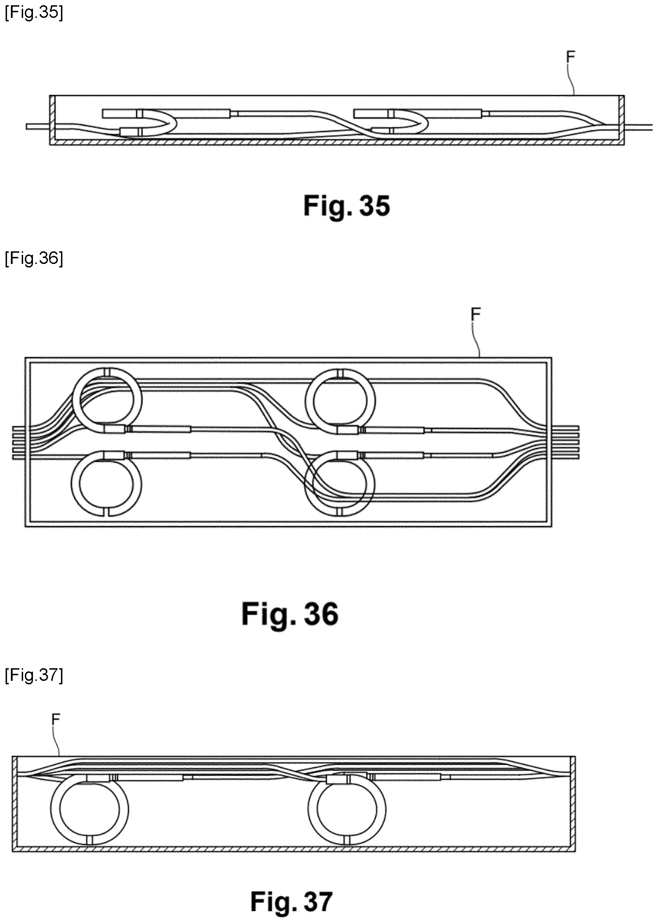

De préférence, les courbures d'au moins une partie des dispositifs de compensation sont en vis-à-vis selon une direction perpendiculaire à la longitudinale commune aux dispositifs de jonction, comme par exemple illustré en figures 35 et 36.

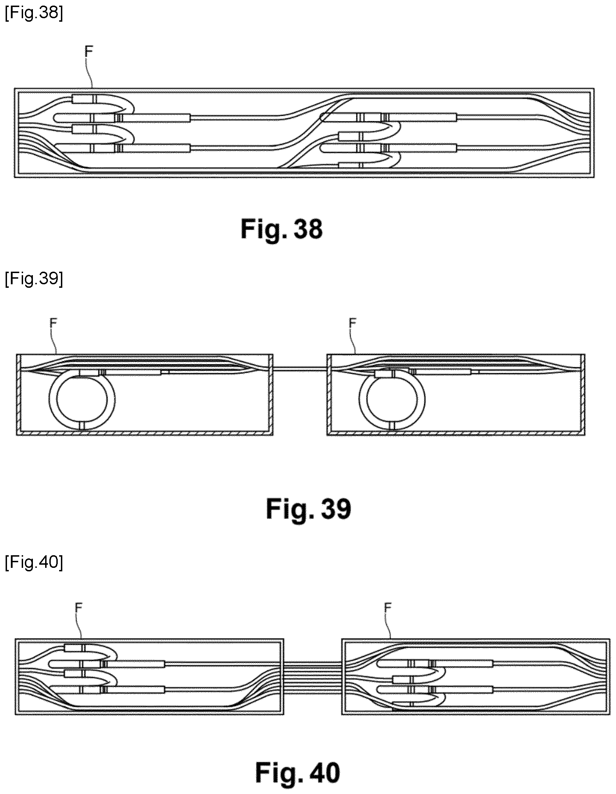

De préférence, les courbures d'au moins une partie des dispositifs de compensation sont en vis-à-vis de sorte que leurs axes sont confondus, comme par exemple illustré en figures 37 et 38.

Les différentes configurations des ensembles de connexion ou des installations de câbles supraconducteurs visent notamment à réduire ou limiter la longueur de la fosse de jonction F.

Comme par exemple illustré en figures 39, 40, l'installation de câbles supraconducteur comprenant plusieurs ensembles de connexion peut comprendre au moins deux fosses de jonction F dans lesquelles les câbles supraconducteurs arrivent. Chaque fosse de jonction F comprend des ensembles de connexion respectifs. Chaque ensemble de connexion connecte une paire respective des câbles supraconducteurs arrivant dans la fosse F, un des câbles de la paire traversant l'autre fosse de jonction. Une telle installation est particulièrement adaptée lorsque le nombre de câbles supraconducteurs est trop élevé pour les connecter dans un même espace.

Les figures 33 à 40 représentent des installations dans lesquelles les fosses de jonction F comprennent des ensembles de connexion ayant un seul dispositif de compensation. Cependant, les exemples représentés pourraient comprendre des ensembles de connexion comprenant deux dispositifs de compensation, tels que précédemment décrits. En outre, ces figures représentent des installations comprenant des dispositifs de compensation d'angle 360°, mais les exemples représentés pourraient comprendre d'autres dispositifs de compensation notamment tels que décrits précédemment. D'autre part, sur ces figures 33 à 40, les dispositifs de connexion ont leurs ports de connexion situés à leurs extrémités opposées. Cependant, les dispositifs de jonction pourraient être différents, et notamment comprendre des ports de connexion situés à la même extrémité du dispositif de jonction, en particulier tel que précédemment décrit.

## Revendications

1. Installation de câbles supraconducteurs comprenant : au moins une fosse de jonction (F) dans laquelle arrivent des câbles supraconducteurs (C1, C2), chaque câble supraconducteur (C1, C2) comprenant un coeur de câble entouré d'une enveloppe cryogénique (Cr1, Cr2) et au moins un ensemble de connexion (100, 120, 130, 140, 150, 160, 170, 180) situé dans ladite fosse de jonction (F) de manière à connecter deux desdits câbles supraconducteurs pour réaliser une liaison de transmission,
ledit ensemble de connexion comprenant :
un dispositif de jonction (50, 60) comprenant deux ports de connexion (P1, P2), chaque port de connexion étant configuré pour recevoir le coeur de câble d'un respectif des deux câbles supraconducteurs (C1, C2), et
deux dispositifs de compensation (22, 24, 26) configurés pour absorber une variation de longueur du coeur de câble d'un respectif desdits câbles supraconducteurs (C1, C2), causée par une variation de température pour un passage à l'état supraconducteur,
chaque dispositif de compensation (22, 24, 26) comprenant une extrémité d'entrée (Ee) configurée pour recevoir le coeur de câble et une extrémité de sortie (Es) connectée à l'un respectif desdits ports de connexion (P1, P2) de manière à délivrer le coeur de câble vers le dispositif de jonction (50, 60).

2. Installation de câbles supraconducteurs selon la revendication 1, dans laquelle les ports de connexion (P1, P2) du dispositif de jonction (60) sont situés à des extrémités opposées du dispositif de jonction (60).

3. Installation de câbles supraconducteurs selon la revendication 1, dans laquelle les ports de connexion (P1, P2) du dispositif de jonction sont situés à une même extrémité du dispositif de jonction (50).

4. Installation de câbles supraconducteurs selon l'une des revendications précédentes, dans laquelle chaque dispositif de compensation (22, 24, 26) comporte :
- un tube intérieur (8) et un tube extérieur (7) coaxiaux entre lesquels une isolation par le vide est prévue,
le tube intérieur (8) étant configuré pour recevoir le coeur du câble supraconducteur respectif et un fluide de refroidissement destiné à refroidir ledit coeur à une température de refroidissement pour un état supraconducteur ;
lesdits tubes intérieur et extérieur (7, 8) présentant au moins une courbure d'un angle supérieur ou égal à 90°, et les dimensions des tubes intérieur et extérieur (7, 8) étant configurées de sorte que, dans ladite courbure :
- à température ambiante, le coeur de câble est à proximité d'une portion de la paroi interne du tube intérieur (8) ayant le rayon de courbure (Ra) le plus grand, et
- à température de refroidissement, le coeur de câble est à proximité d'une portion de la paroi interne du tube intérieur (8) ayant un rayon de courbure (Ri) le plus petit.

5. Installation de câbles supraconducteurs selon la revendication précédente, dans laquelle les courbures des dispositifs de compensation (22, 24, 26) sont logées dans un espace délimité par un côté du dispositif de jonction (50, 60) et/ou agencées de sorte que leurs axes (β) sont parallèles entre eux.

6. Installation de câbles supraconducteurs selon la revendication 4 ou 5, dans laquelle les courbures sont situées sensiblement en vis-à vis le long d'une direction longitudinale du dispositif de jonction (50, 60).

7. Installation de câbles supraconducteurs selon l'une des revendications 4 à 6, dans laquelle les axes (β) des courbures sont perpendiculaires ou parallèles à un plan transversal central commun (α) des ports de connexion (P1, P2) du dispositif de jonction (50, 60).

8. Installation de câbles supraconducteurs selon l'une des revendications 4 à 5, dans laquelle
les courbures des dispositifs de compensation (22a, 22b) sont de part et d'autre d'un plan médian du dispositif de jonction (50) ; et
les axes (β) des courbures sont parallèles à un plan transversal commun (a) des ports de connexion (P1, P2) du dispositif de jonction (50).

9. Installation de câbles supraconducteurs selon l'une des revendication 4 à 8, dans laquelle un (22a) desdits dispositifs de compensation a une courbure de 360°,
lequel dispositif de compensation (22a) ayant une extrémité de sortie (Es) orientée vers le même côté que le port de connexion (P1) correspondant du dispositif de jonction (50),
ladite extrémité de sortie (Es) dudit dispositif de compensation (22a) étant connectée au port respectif (P1) via un élément de rattrapage (15) comprenant une forme en U.

10. Installation de câbles supraconducteurs selon les revendications 2, 4 et 6 dans laquelle
les courbures des dispositifs de compensation (24a, 24b) ont des angles de 180° et présentent entre elles un décalage angulaire (Θ) de manière à laisser passer les câbles (C1, C2) connectés aux dispositifs de compensation (24a, 24b).

11. Installation de câbles supraconducteurs selon l'une des revendications précédentes, comprenant une pluralité d'ensembles de connexion situés dans ladite fosse de jonction (F) de manière à connecter une paire respective desdits câbles supraconducteurs.

12. Installation selon la revendication 11, dans laquelle les dispositifs de jonction sont alignés suivant une même direction longitudinale et les courbures sont en vis-à-vis suivant ladite direction longitudinale, ou suivant une direction perpendiculaire à ladite direction longitudinale.

13. Installation selon l'une des revendications précédentes comprenant au moins deux fosses de jonction (F) dans lesquelles les câbles supraconducteurs arrivent,
chaque fosse de jonction (F) comprenant au moins un ensemble de connexion de manière à connecter une paire respective desdits câbles supraconducteurs, un des câbles de la paire traversant l'autre fosse de jonction (F).

14. Installation selon l'une des revendications précédentes, dans laquelle les câbles supraconducteurs connectés à l'au moins un ensemble de connexion comprennent une première extrémité connectée audit ensemble de connexion et une deuxième extrémité connectée à un dispositif de compensation.

15. Installation de câbles supraconducteurs selon l'une des revendications précédentes, comprenant une pluralité d'ensembles de connexion, connectant en série une pluralité de câbles d'une liaison de transmission.
